# EUROPEAN PATENT APPLICATION

(11) **EP 4 507 109 A1**
(43) Date of publication of application: **12.02.2025**
(21) Application number: 24792791.6
(22) Date of filing: 29.01.2024
(51) Int. Cl.: H01M 50/50, H01M 50/204

(54) **AUTOMATIC BUSBAR ASSEMBLY JIG, AND BATTERY MODULE MANUFACTURING METHOD USING SAME**

(30) Priority: 18.04.2023 KR 20230050470
(71) Applicant: LG Energy Solution, Ltd., Seoul 07335 (KR)
(72) Inventor: YOO, Inseok, Daejeon 34122 (KR); PARK, Sungkyu, Daejeon 34122 (KR); JEUNG, Seokwon, Daejeon 34122 (KR)
(74) Representative: Goddar, Heinz J.
(86) International application number: PCT/KR2024/001322
(87) International publication number: WO 2024/219603

(57) **Abstract**

A busbar automatic assembly jig according to an embodiment of the present disclosure includes: a top frame provided with a plurality of insertion holes into which a busbar is inserted; and a slide unit disposed to slidably move on a lower side of the top frame to support and release the busbar.

## Description

### [TECHNICAL FIELD]

The present disclosure relates to a busbar automatic assembly jig, and more specifically, to a jig capable of automatically assembling busbars when manufacturing a battery module and a method for manufacturing a battery module using the same.

### [BACKGROUND ART]

A secondary battery means a battery capable of charging/discharging, unlike a nonrechargeable primary battery, and is applied not only to portable devices but also to electric vehicles (EV, Electric Vehicle) and hybrid vehicles (HEV, Hybrid Electric Vehicle) that are driven by an electric drive source.

Currently, widely used secondary batteries include lithium ion batteries, lithium polymer batteries, nickel-cadmium batteries, nickel-hydrogen batteries, nickel-zinc batteries, and the like. The operating voltage of a unit secondary battery cell, i.e., a unit battery cell is about 2.5V-4.2V. Accordingly, when higher output voltage is required, a plurality of battery cells may be connected in series to construct a battery pack. Additionally, according to the charge/discharge capacity required for the battery pack, a plurality of battery cells may be connected in parallel to construct a battery pack. Accordingly, the number of battery cells included in the battery pack may be variously set according to the required output voltage or charge/discharge capacity.

When constructing a battery pack by connecting a plurality of battery cells in series/in parallel, it is general to first construct a battery module including at least one battery cell, preferably a plurality of battery cells, and then construct a battery pack using at least one such battery module with the addition of other components. Herein, the battery module refers to a component in which a plurality of battery cells are connected in series or in parallel, and the battery pack refers to a component in which a plurality of battery modules are connected in series or in parallel to increase the capacity and output.

A battery module is configured by electrically connecting a plurality of battery cells, and in this connection, the plurality of battery cells are connected using a busbar.

When a battery module is manufactured, the busbar is bonded to a cell frame made of plastic injection using an adhesive such as glue. This adhesion process involves workers manually assembling each item one by one, so there is a high risk that the busbar might be contaminated with adhesive, and components of other modules might also be contaminated.

In addition, quality issues may occur in which busbars that are supposed to be assembled in a correct position may not be assembled in the correct position depending on the skill level of workers. Such human errors may lead to unexpected defects and safety issues due to inconsistent assembly quality during mass production, and may lead to loss of battery module functionality due to poor electrical connection between battery cells.

### [DETAILED DESCRIPTION OF INVENTION]

### [TECHNICAL PROBLEMS]

An aspect of the present disclosure is directed to providing a busbar automatic assembly jig capable of blocking the source of adhesive contamination and ensuring that a busbar is always assembled in a correct position, and a method for manufacturing a battery module using the same.

### [TECHNICAL SOLUTION]

A busbar automatic assembly jig according to an embodiment of the present disclosure includes: a top frame provided with a plurality of insertion holes into which a busbar is inserted; and a slide unit for supporting and releasing the busbar slidably moved to a lower side of the top frame and disposed on the top frame.

In addition, the insertion hole in the top frame extends in a first direction along a lengthwise direction of the busbar.

In addition, the plurality of insertion holes in the top frame are disposed to be spaced apart along a second direction perpendicular to the first direction.

In addition, in the insertion hole of the top frame, both side surfaces of the insertion hole extending in a first direction are formed to be inclined downward toward the bottom.

In addition, in the insertion hole of the top frame, both ends connecting the both side surfaces of the insertion hole are formed to be inclined downward toward the bottom.

In addition, edge grooves are disposed at each edge of the insertion hole of the top frame.

In addition, the slide unit includes: a first slide tray that is slidably disposed on one side of the top frame and supports and releases one end of the busbar by sliding movement; and a second slide tray that is slidably disposed on the other side of the top frame and supports and releases the other end of the busbar by sliding movement.

In addition, the first slide tray includes an end support unit supporting one end of the busbar, and the second slide tray includes an end support unit supporting the other end of the busbar.

In addition, the top frame includes a plurality of guide grooves extending in a first direction, and the first slide tray and the second slide tray each include guide blocks that are inserted into the guide grooves to guide movement.

In addition, there is further included a bottom frame disposed on a lower side of the top frame.

In addition, the bottom frame includes a through hole therein, and the busbar disposed on the top frame falls down through the through hole when a support of the slide unit is released.

In addition, the first slide tray includes an outer protrusion unit on the outside of a lower portion that contacts an outer side surface of the bottom frame when the first slide tray moves toward the top frame, and the second slide tray includes an outer protrusion unit on the outside of a lower portion that contacts an outer side surface of the bottom frame when the second slide tray moves toward the top frame.

In addition, the second slide tray includes a lower protrusion unit at the bottom. When the second slide tray moves in a direction away from the top frame, the lower protrusion unit contacts the bottom frame to restrict movement of the second slide tray.

In addition, the first and second slide trays each include a seating guide member that guides the busbar from falling from the insertion hole when a support of the busbar is released.

In addition, there is further included a drive unit for slidingly moving the first and second slide trays, respectively.

In addition, a method for manufacturing a battery module according to an embodiment of the present disclosure including a cell top frame with a busbar disposed on an upper portion thereof includes: disposing the busbar in an insertion hole of a top frame in a busbar automatic assembly jig including: the top frame provided with a plurality of insertion holes; and a slide unit for supporting and releasing the busbar slidably moved to a lower side of the top frame and disposed on the top frame; disposing the busbar automatic assembly jig on an upper portion of the cell top frame; releasing a support of the busbar by slidably moving the slide unit in the busbar automatic assembly jig; and releasing a support of the busbar so that the busbar falls from the top frame and is seated on the cell top frame.

In addition, in the releasing of the support of the busbar, a support of one end of the busbar is released by slidably moving the first slide tray, and then a support of the other end of the busbar is released by slidably moving the second slide tray.

### [EFFECT OF INVENTION]

Accordingly, according to an embodiment of the present disclosure, when battery modules are manufactured, the source of glue adhesive contamination can be blocked and a busbar can be always assembled in a correct position.

### [BRIEF DESCRIPTION OF THE DRAWING]

FIG. 1 is a perspective view of a battery module.
FIG. 2 is an exploded perspective view of the battery module of FIG. 1.
FIG. 3 is a partial detailed view of a cell top frame in FIG. 1.
FIG. 4 is a perspective view of a busbar automatic assembly jig according to an embodiment of the present disclosure.
FIG. 5 is an exploded perspective view of the busbar automatic assembly jig according to an embodiment of the present disclosure.
FIG. 6 is a diagram showing the operation of first and second slide trays in the busbar automatic assembly jig of FIG. 4.
FIG. 7 is a diagram showing the process of assembling the busbar to a cell top frame using the busbar automatic assembly jig of FIG. 4.
FIG. 8 is a detailed plan view of the busbar automatic assembly jig according to an embodiment of the present disclosure.
FIG. 9 is a partial detailed view of FIG. 8.
FIGS. 10 and 11 are partial detailed views showing before and after sliding of the slide tray in the busbar automatic assembly jig of FIG. 4.
FIG. 12 is a diagram showing the operation of the first and second slide trays in the busbar automatic assembly jig according to the second embodiment of the present disclosure.

### [BEST MODE FOR CARRYING OUT THE INVENTION]

The advantages, features of the present disclosure and methods for achieving the same will become apparent from the following description of embodiments given in detail in conjunction with the accompanying drawings. However, the present disclosure is not limited to the embodiments described herein but may be embodied in many different forms. Rather, the embodiments disclosed herein are provided in order to ensure that the disclosure becomes thorough and perfect and to ensure that the scope of the present disclosure is sufficiently delivered to those skilled in the technical field to which the present disclosure pertains. The present disclosure is defined only by the claims. Accordingly, in some embodiments, well-known process stages, well-known device structures, and well-known techniques are not specifically described in order to avoid ambiguous interpretation of the present disclosure. Like reference numerals refer to like elements throughout the specification.

In the drawings, in order to clearly express a plurality of layers and regions, the thickness may be exaggerated. Like reference numerals refer to like portions throughout the specification. It will be understood that when an element such as a layer, film, region or substrate is referred to as being "on" another element, it may be directly on the other element or intervening elements may also be present. In contrast, when an element is referred to as being "directly on" another element, there are no intervening elements present. Further, it will also be understood that when an element such as a layer, film, region or substrate is referred to as being "below" another element, it may be directly below the other element, or intervening elements may also be present. In contrast, when an element is referred to as being "directly below" another element, there are no intervening elements present.

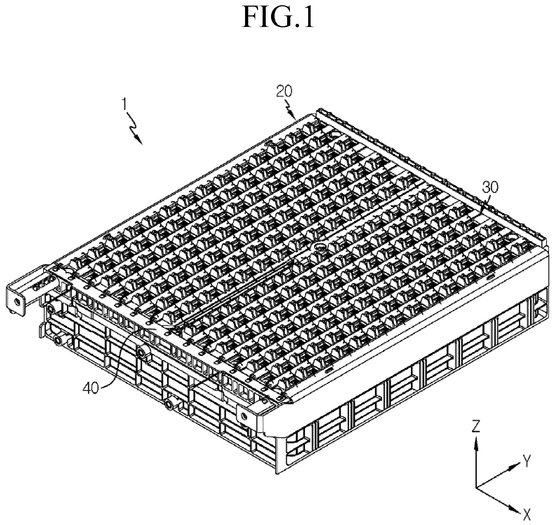

Prior to the description of a busbar automatic assembly jig 1000 according to an embodiment of the present disclosure, the structure of a battery module 1 will be described with reference to FIGS. 1 to 3.

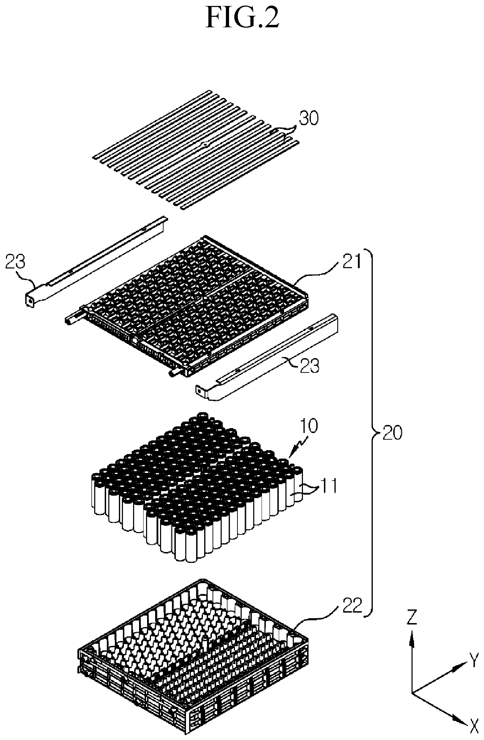

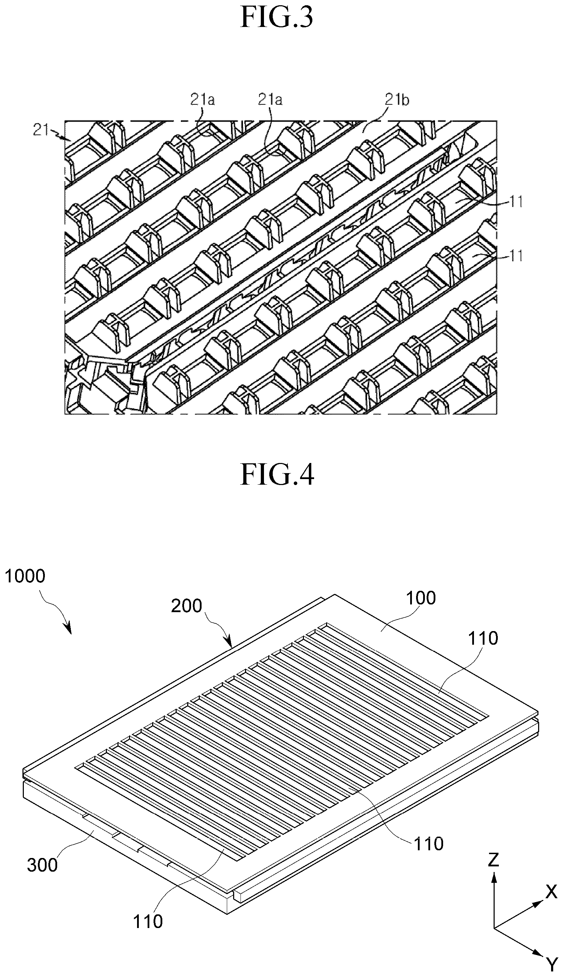

FIG. 1 is a perspective view of a battery module. FIG. 2 is an exploded perspective view of the battery module of FIG. 1. FIG. 3 is a partial detailed view of the cell top frame in FIG. 1.

The battery module 1 may include a plurality of battery cells 10, a module housing 20, and a plurality of busbars 30, and may further include a sensing plate 40 connected to the busbar 30 and used to sense the voltage of each battery cell.

The battery cells 10 may be cylindrical battery cells 10 in which an electrode assembly is embedded in a metal can. The cylindrical battery cell 10 may be configured to include a battery can 11 mainly made of a lightweight conductive metal material such as aluminum in a cylindrical shape, a jelly-roll type electrode assembly accommodated in the battery can 11, and a top cap coupled to an upper portion of the battery can 11. The top cap is connected to the positive electrode tab of the electrode assembly to function as a positive electrode terminal, and the battery can 11 is connected to the negative electrode tab of the electrode assembly to function as a negative electrode terminal.

The cylindrical battery cell 10 may be inserted and disposed in the module housing 20, and the cylindrical battery cells 10 are bonded to the busbars 30 by wire in a predetermined pattern to be connected in series and/or in parallel to each other.

An embodiment of the present disclosure is not necessarily be construed as limited to the battery module 1 applying the cylindrical battery cell 10. For example, the battery module 1 according to an embodiment of the present disclosure may be configured using a can-type battery cell having a rectangular parallelepiped shape or other shape, other than a cylindrical shape in the battery can 11.

The module housing 20 is a structure for accommodating and fixing the battery cells 10 therein to protect the battery cells 10 from external impact or vibration, and may be configured to include a cell bottom frame 22 and a cell top frame 21.

The cell bottom frame 22 may be configured to have cell insertion holes inside an outer rim in a rectangular box shape and to insert the battery cells 10 into the cell insertion holes one by one. For example, as shown in FIG. 2, the battery cells 10 may be inserted and disposed in each cell insertion hole such that the top cap faces upward and the lower region, that is, the bottom of the battery can 11 faces downward. Herein, the cell insertion hole is configured to penetrate the bottom surface of the cell bottom frame 22. Accordingly, the bottom of the battery can 11 of the battery cells 10 may be exposed below the bottom surface of the cell bottom frame 22. Although not illustrated in the drawings, it may also be configured such that a thermally conductive pad having insulation is attached to the bottom surface of the cell bottom frame 22 and a cooling plate or a heat sink (including a refrigerant therein) is attached to the other surface of the thermally conductive pad, thereby absorbing heat of the cylindrical battery cells 10.

The cell bottom frame 22 may be firmly coupled to the cell top frame 21 by a long bolt (not shown) together with hook fastening.

The cell top frame 21 may cover an upper region of the battery cells 10 and may be configured to be coupled to the cell bottom frame 22.

For example, the cell top frame 21 may have cell sockets (not shown) matching the cell insertion holes of the cell bottom frame 22 up and down. When the cell top frame 21 and the cell bottom frame 22 are coupled, the battery cells 10 may be introduced into the cell sockets from the top cap so that an upper region of the entire battery cells 10 may be covered by the cell top frame 21.

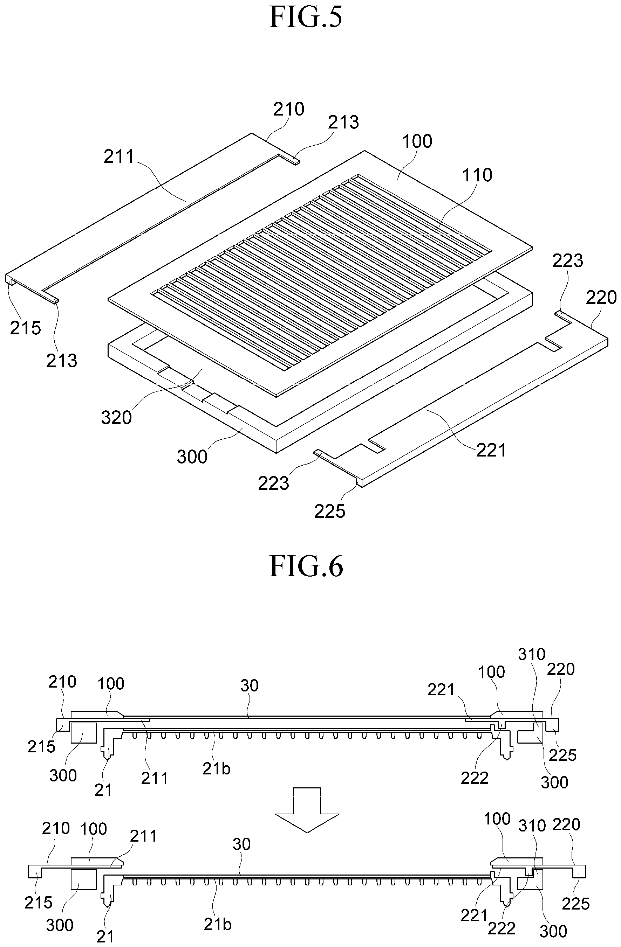

In addition, the cell top frame 21 may include an upper surface portion covering the top of the entire battery cells 10 and four side portions forming a wall surrounding the outside of the entire battery cells 10 together with the cell bottom frame 22, wherein the upper surface portion of the cell top frame 21, as illustrated in FIG. 5, has a plurality of holes 21a and seating grooves 21b. A side surface plate 23 may be coupled to a side surface portion of the cell top frame 21.

The holes 21a have a configuration in which the cell top frame 21 is partially perforated so that the top cap of the battery cells 10 or an upper end of the battery can 11 is partially exposed to the outside.

As illustrated in FIG. 3, the cell bottom frame 22, when the battery cells 10 are inserted therein, may be configured such that the battery cells 10 form a plurality of rows in an X-axis or Y-axis direction of the module housing 20. When such battery cells 10 are covered with the cell top frame 21, the top cap of each battery cell 10 or an upper end of the battery can 11 is partially exposed to the outside.

The holes 21a are used as paths for connecting the battery cells 10 located inside the module housing 20 to the busbars 30 located outside the module housing 20 by metal wires 500. For example, the busbar 30 may be connected to the top cap exposed through the holes 21a or an upper end of the battery can 11 by a metal wire. For example, a wire bonding method in which one end of the metal wire is ultrasonically welded to the top cap or an upper end of the battery can 11 and the other end of the metal wire is ultrasonically welded to the busbar 30 may be employed.

The seating grooves 21b are places where the busbar 30 is to be seated and fixed, and may extend along the lengthwise direction (Y-axis direction) of the module housing 20 to be provided at predetermined intervals in the widthwise direction (X-axis direction) of the module housing 20. The busbar 30, which is a straight metal conductor having the same left and right widths, may be disposed in each of the seating grooves 21b.

The busbar 30 has approximately the same left and right widths as the seating groove 21b, so that its movement in the widthwise direction (X-axis direction) may be blocked.

In addition, a pin or a pillar may be provided to protrude from the surface of the seating groove 21b (in an Z-axis direction), and the busbar 30 may have a pin hole into which the pin of the seating groove 21b is inserted. Accordingly, the pin of the seating groove 21b is inserted into the pin hole of the busbar 30, thereby preventing movement thereof.

The busbar 30 is bonded to the seating groove 21b of the cell top frame 21 using an adhesive such as glue. This adhesion process involves workers manually assembling each item one by one, so there is a high risk that the busbar 30 might be contaminated with adhesive, and components of other modules might also be contaminated.

In order to address an issue associated therewith, an embodiment of the present disclosure is directed to providing the busbar automatic assembly jig 1000 capable of automatically assembling the busbar 30 to the cell top frame 21.

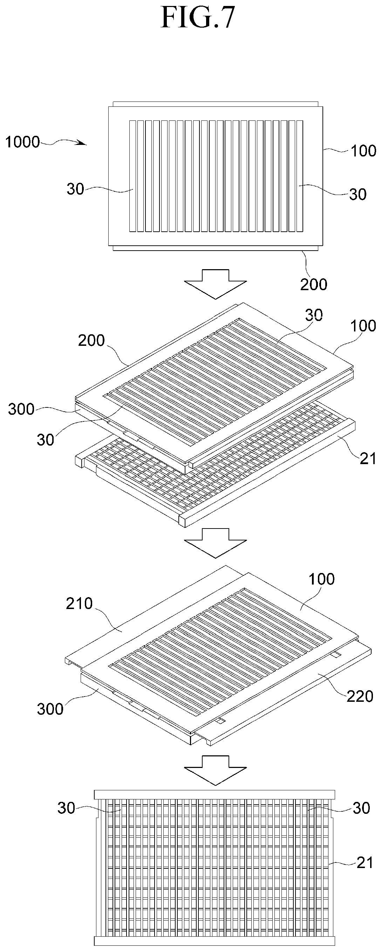

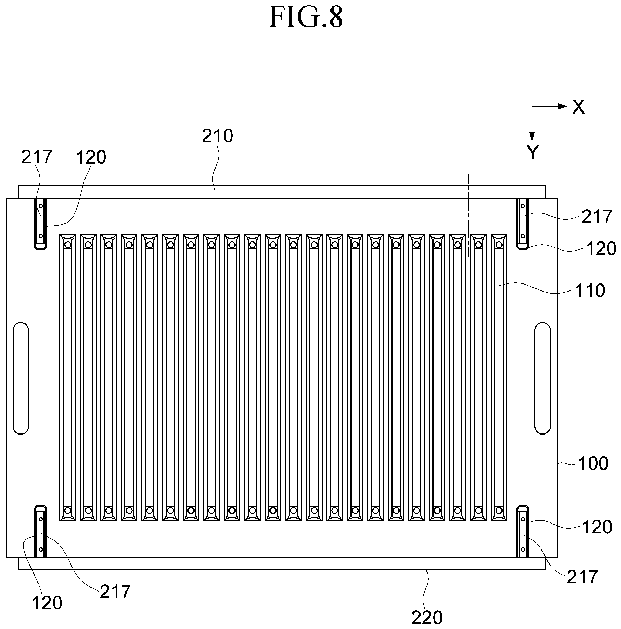

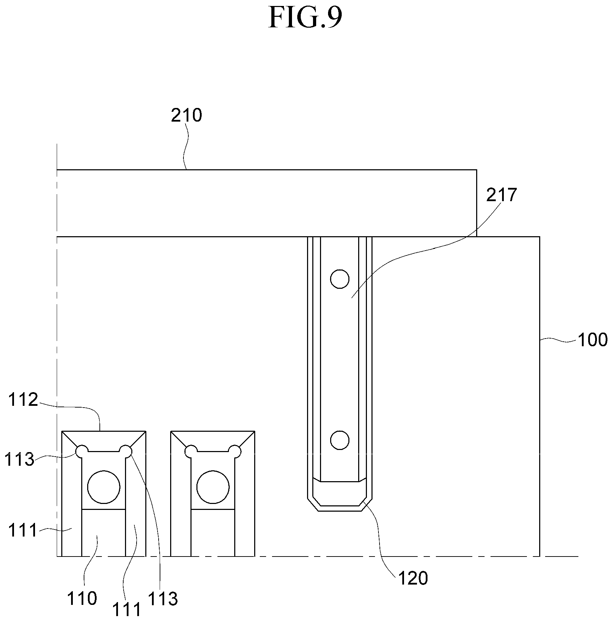

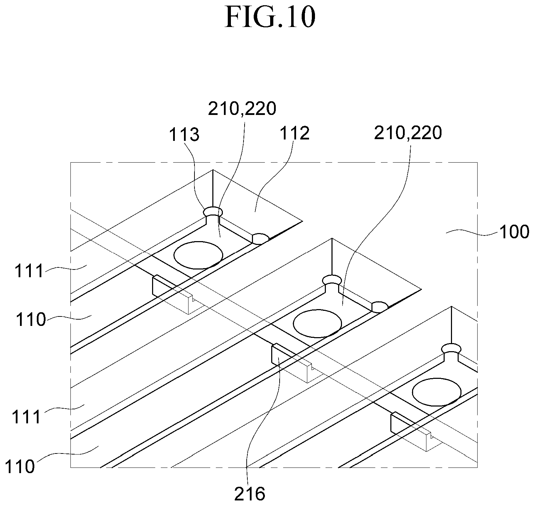

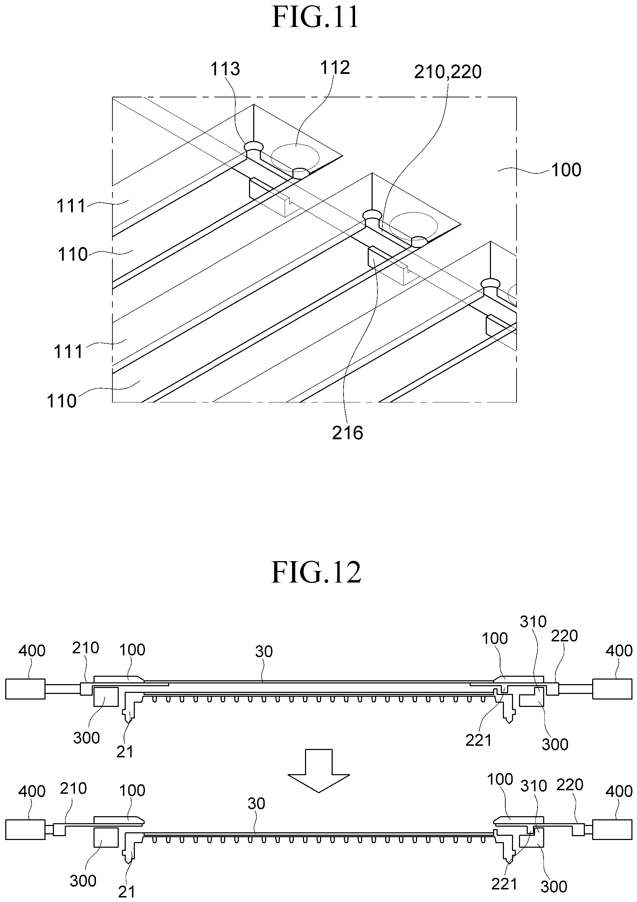

FIG. 4 is a perspective view of a busbar automatic assembly jig according to an embodiment of the present disclosure. FIG. 5 is an exploded perspective view of the busbar automatic assembly jig according to an embodiment of the present disclosure. FIG. 6 is a diagram showing the operation of first and second slide trays in the busbar automatic assembly jig of FIG. 4. FIG. 7 is a diagram showing the process of assembling the busbar to a cell top frame using the busbar automatic assembly jig of FIG. 4. FIG. 8 is a detailed plan view of the busbar automatic assembly jig according to an embodiment of the present disclosure. FIG. 9 is a partial detailed view of FIG. 8. FIGS. 10 and 11 are partial detailed views showing before and after sliding of the slide tray in the busbar automatic assembly jig of FIG. 4.

The busbar automatic assembly jig 1000 according to an embodiment of the present disclosure may include a top frame 100 and a slide unit 200. In addition, the busbar automatic assembly jig 1000 may further include a bottom frame 300.

The top frame 100 is disposed on an upper portion of the slide unit 200 and the bottom frame 300, and a plurality of insertion holes 110 are spaced apart and disposed at regular intervals.

The insertion hole 110 of the top frame 100 may be the same size or slightly larger than the busbar 30.

Just as the busbar 30 may be inserted into the insertion hole 110 of the top frame 100, and in the battery module 1, the sating groove 21b in the cell top frame 21 may extend along a first direction (Y-axis direction) of the cell top frame 21 and may be provided at predetermined intervals along a second direction (X-axis direction) of the cell top frame (21), the insertion hole 110 in the top frame 100 may extends along the first direction (Y-axis direction) of the top frame 100 and may be provided at predetermined intervals along the second direction (X-axis direction) of the top frame 100. The second direction (X-axis direction) may be perpendicular to the first direction (Y-axis direction).

As illustrated in FIGS. 9 to 11, both side surfaces 111 extending from the insertion hole 110 of the top frame 100 in a lengthwise direction (Y-axis direction) of the insertion hole 110 may be formed to be inclined downward toward the bottom, and both end surfaces 112 of the insertion hole 110 connecting both ends of the both side surfaces 111 may be formed to be inclined downward toward the bottom.

As such, the both side surfaces 111 and the both end surfaces 112 of the insertion hole 110 are formed to be inclined downward, allowing the busbar 30 to be stably located in a correct position within the insertion hole 110.

Accordingly, in a plan view, the upper area of the insertion hole 110 may be larger than the lower area thereof, and the lower area of the insertion hole 110 may be equal to or larger than that of the busbar 30.

In addition, in the insertion hole 110, as illustrated in FIGS. 9 to 11, edge grooves 113 that are concave inward are formed at four edge portions of the insertion hole 110.

As such, the edge grooves 113 are formed at the four edge portions of the insertion hole 110, so that when the busbar 30 inserted into the insertion hole 110 falls to an upper portion of the cell top frame 21 for assembly with the battery module 1, the assembly process may be performed smoothly without being caught on the edge portion of the insertion hole 110.

In addition, as illustrated in FIGS. 8 and 9, guide grooves 120 are each formed on both sides of the edge where the first slide tray 210 is disposed and on both sides of the edge where the second slide tray 220 is disposed in the top frame 100.

Each of the guide grooves 120 extends from the edge end of the top frame 100 along a lengthwise direction (Y-axis direction) of the insertion hole 110.

Guide blocks 217 of the first slide tray 210 and the second slide tray 220 are inserted into each of the guide grooves 120. As such, the guide blocks 217 of the first slide tray 210 and the second slide tray 220 are inserted into each of the guide grooves 120 to guide the movement, so that the first slide tray 210 and the second slide tray 220 may move stably without being twisted during the slide movement. As another example, a guide block may be disposed on the top frame 100, and guide grooves may be disposed on the first and second slide trays 210 and 220.

The slide unit 200 is disposed on a lower side of the top frame 100 to support the busbar 30 inserted into the insertion hole 110 of the top frame 100, is slidably moved to release support of the busbar 30, and includes the first slide tray 210 and the second slide tray 220.

The first slide tray 210 and the second slide tray 220 are disposed on the left and right sides of the top frame 100 and support the busbar 30 inserted into the insertion hole 110 of the top frame 100.

The first slide tray 210 is disposed on a lower left side of the top frame 100 in the drawing and supports one end of the busbars 30 each inserted into the insertion holes 110 of the top frame 100.

The first slide tray 210 extends in an X direction along the lower left edge of the top frame 100 in the drawing, and includes an end support unit 211 on the inside that supports one end of the busbar 30 inserted into the insertion hole 110.

In addition, the first slide tray 210 is provided with inner protrusion units 213 protruding in the direction of the top frame 100 on both sides of the inner surfaces. The inner protrusion unit 213 may be inserted into a groove (not shown) extending in a lengthwise direction (Y-axis direction) of the insertion hole 110 on the lower surface of the top frame 100. When the first slide tray 210 moves forward in the direction of the top frame 100 and is in a state capable of supporting the busbar 30, the inner protrusion unit 213 may contact the end of the groove and serve as a stopper.

In addition, an outer protrusion unit 215 is disposed on a lower outer side of the first slide tray 210. The outer protrusion unit 215 extends along an X direction of the first slide tray 210.

The first slide tray 210 is disposed to be slidably movable between the top frame 100 and the bottom frame 300. As illustrated in FIG. 6, as the first slide tray 210 moves forward in the direction of the top frame 100, the end support unit 211 of the first slide tray 210 is disposed on the lower side of one end of the insertion hole 110 of the top frame 100, so that the first slide tray 210 is in a state capable of supporting one end of the busbar 30. In this connection, the outer protrusion unit 215 may move forward to one side surface of the bottom frame 300, and the outer protrusion unit 215 may serve as a stopper when the first slide tray 210 moves forward.

The second slide tray 220 is disposed on a lower right side of the top frame 100 in the drawing and supports the other ends of the busbars 30 each inserted into the insertion holes 110 of the top frame 100.

The second slide tray 220 extends in an X direction along the lower right edge of the top frame 100 in the drawing, and includes the end support unit 211 on the inside that supports the other end of the busbar 30 inserted into the insertion hole 110.

In addition, the second slide tray 220 is provided with inner protrusion units 223 protruding in the direction of the top frame 100 on both sides of the inner surfaces. The inner protrusion unit 223 may be inserted into a groove (not shown) extending in a lengthwise direction (Y-axis direction) of the insertion hole 110 on the lower surface of the top frame 100. When the second slide tray 220 moves forward in the direction of the top frame 100 and is in a state capable of supporting the busbar 30, the inner protrusion unit 223 may contact the end of the groove and serve as a stopper.

In addition, an outer protrusion unit 225 is disposed on a lower outer side of the second slide tray 220. The outer protrusion unit 225 extends along an X direction of the second slide tray 220.

In addition, a lower protrusion unit 222 is disposed on a lower outer side of the second slide tray 220 inside the outer protrusion unit 225. The lower protrusion unit 222 may extend along an X direction of the second slide tray 220.

The second slide tray 220 is disposed to be slidably movable between the top frame 100 and the bottom frame 300. As illustrated in FIG. 6, the second slide tray 220 moves forward in the direction of the top frame 100, and the end support unit 221 of the second slide tray 220 is disposed on the lower side of the other end of the insertion hole 110 of the top frame 100, so that the second slide tray 220 is in a state capable of supporting the other end of the busbar 30. In this connection, the outer protrusion unit 225 may move forward to one side surface of the bottom frame 300, and the outer protrusion unit 225 may serve as a stopper when the second slide tray 220 moves forward.

As such, as illustrated in FIG. 6, with the first slide tray 210 and the second slide tray 220 supporting both ends of the busbar 30 inserted into the insertion hole 110 of the top frame 100, when the first slide tray 210 and the second slide tray 220 move backward in a direction away from the top frame 100, and both ends of the busbar 30 are completely separated from the first slide tray 210 and the second slide tray 220, the busbar 30 falls due to its own weight. When the second slide tray 220 moves backward away from the top frame 100, the lower protrusion unit 222 may move up to a step unit 310 of the bottom frame 300, and the lower protrusion unit 222 may serve as a stopper when the second slide tray 220 moves backward.

In the drawing, the inner protrusion unit 222 is illustrated in the second slide tray 220, but the first slide tray 210 may also be provided with the inner protrusion unit 222.

As such, the busbar 30 falls from the insertion hole 110 of the top frame 100 by its own weight and is seated in the seating groove 21b of the cell top frame 21 disposed on a lower side of the busbar automatic assembly jig 1000. As a result, the busbar 30 is assembled to the battery module 1.

When the first slide tray 210 and the second slide tray 220 move backward, the first and second slide trays 210 and 220 may be moved backwards simultaneously. After the first slide tray 210 is moved backwards, the second slide tray 220 may also be moved backwards. In this connection, one end of the busbar 30 supported on the first slide tray 210 is first seated in the seating groove 21b of the cell top frame 21 by the backward movement of the first slide tray 210, and then, the other end of the busbar 30 supported on the second slide tray 220 is seated in the seating groove 21b of the cell top frame 21 by the backward movement of the second slide tray 220.

As such, one end and the other end of the busbar 30 are sequentially seated in the seating groove 21b of the cell top frame 21 by sequential movement of the first and second slide trays 210 and 220, so that the busbar 30 may be more stably seated on the cell top frame 21.

The guide blocks 217 each inserted into the guide grooves 120 of the top frame 100 may be disposed on the first slide tray 210 and the second slide tray 220.

In addition, the first and second slide trays 210 and 220 may be provided with a seating guide member 216 so that the busbar 30 may always be assembled in a correct position while falling due to its own weight.

As shown in FIGS. 10 and 11, the seating guide member 216 is coupled to the first and second slide trays 210 and 220 so as to guide the busbar 30 to be assembled in a correct position when dropping from the insertion hole 110 of the top frame 100 and seating on the cell top frame 21. The inner ends that are disposed below each insertion hole 110 in the first and second slide trays 210 and 220 and protrude from the seating guide member 216 in the direction of the insertion hole 110 may protrude inward than the first and second slide trays 210 and 220.

Accordingly, when the first and second slide trays 210 and 220 move backward in the direction away from the top frame 100, the seating guide member 216 also moves together. When the busbar 30 falls from the insertion hole 110 of the top frame 100, the end of the busbar 30 is seated on the cell top frame 21 along an inner end surface of the seating guide member 216, thereby allowing the busbar 30 to be assembled in a correct position.

The bottom frame 300 may be disposed on a lower side of the top frame 100 and the first and second slide trays 210 and 220.

The bottom frame 300 supports the top frame 100 and the first and second slide trays 210 and 220 on the lower side of the top frame 100 and the first and second slide trays 210 and 220, and has an approximately square frame shape and has a square through hole 320 formed therein.

The through hole 320 may be the same as or larger than the region where the insertion hole 110 into which the busbar 30 is inserted is disposed in the top frame 100 on a plane.

When the first and second slide trays 210 and 220 move backward in a state where the busbar 30 inserted into the insertion hole 110 of the top frame 100 is supported by the first and second slide trays 210 and 220 and the support is released, the busbar 30 is seated in the seating groove 21b of the cell top frame 21 through the through hole 320 of the bottom frame 300.

In addition, the step unit 310 may be formed on the bottom frame 300 to limit the backward movement of the inner protrusion unit 222 of the first slide tray 210 and/or the second slide tray 220.

The bottom frame 300 may be coupled to the top frame 100 by various coupling tools such as bolts and pins.

Next, a method for manufacturing a battery module using the busbar automatic assembly jig 1000 according to an embodiment of the present disclosure having the configuration described above will be described.

First, as illustrated in FIG. 2, a plurality of battery cells 10 are disposed inside the cell bottom frame 22. The battery cells 10 are disposed on the cell bottom frame 22 by inserting the battery cells 10 one by one into the cell insertion holes provided inside the outer edge of the cell bottom frame 22.

Then, the busbar 30 is assembled on an upper portion of the cell top frame 21. The busbar 30 is assembled using the busbar automatic assembly jig 1000 described above.

The first slide tray 210 and the second slide tray 220 are moved forward in the busbar automatic assembly jig 1000 toward the top frame 100, so that the first slide tray 210 and the second slide tray 220 are made capable of supporting both ends of the busbar 30.

As such, the busbar 30 is inserted into the insertion hole 110 of the top frame 100 in a state where the first slide tray 210 and the second slide tray 220 are capable of supporting both ends of the busbar 30.

Next, the busbar automatic assembly jig 1000 is disposed on an upper side of the cell top frame 21 of the battery module 1. In this connection, the seating groove 21b of the cell top frame 21 is positioned directly below the insertion hole 110 of the top frame 100 or the busbar 30 of the insertion hole 110. Accordingly, the seating groove 21b of the cell top frame 21 overlaps with the insertion hole 110 of the top frame 100 on a plane.

As described above, before the busbar automatic assembly jig 1000 is disposed on an upper side of the cell top frame 21, the busbar 30 may be disposed in the insertion hole 110 of the top frame 100. As another example, after the busbar automatic assembly jig 1000 is disposed on the upper side of the cell top frame 21, the busbar 30 may be disposed in the insertion hole 110 of the top frame 100.

As such, with the cell top frame 21 of the battery module 1 disposed on a lower side of the busbar automatic assembly jig 1000 where the busbar 30 is inserted into the insertion hole 110 of the top frame 100, a worker holds the first slide tray 210 and the second slide tray 220 by hand and moves the same backwards in a direction away from the top frame 100.

The first and second slide trays 210 and 220 are moved backwards until both ends of the busbar 30 are completely detached from the first and second slide trays 210 and 220. As a result, the busbar 30 falls through the through hole 320 of the bottom frame 300 and onto the cell top frame 21 below by its own weight.

In this connection, the first and second slide trays 210 and 220 may be sequentially moved backwards. As a result, one end and the other end of the busbar 30 may be sequentially seated in the seating groove 21b of the cell top frame 21.

The busbar 30 falls from the insertion hole 110 of the top frame 100 by its own weight and is seated in the seating groove 21b of the cell top frame 21 disposed on a lower side of the busbar automatic assembly jig 1000. As a result, the busbar 30 is assembled to the battery module 1.

As such, the battery module 1 is manufactured, including the process of coupling the cell top frame 21 with the busbar 30 assembled to the cell bottom frame 22 and connecting each of the battery cells 10 to the busbar 30 with a metal wire.

However, as another example, the busbar 30 may be assembled to the cell top frame 21 after the cell top frame 21 is coupled to the cell bottom frame 22.

Accordingly, in an embodiment of the present disclosure, by assembling the busbar 30 to the battery module 1 as described above, unexpected defects and safety issued caused by workers manually assembling the busbar are addressed, and the busbar may be assembled in a correct position.

In addition, an adhesive such as glue is sprayed or applied to the seating groove 21b of the cell top frame 21, and then the busbar automatic assembly jig 1000 is disposed on an upper portion of the cell top frame 21 so that the busbar 30 is assembled to the cell top frame 21 by the busbar automatic assembly jig 1000. Hence, there is no need to concern about workers or busbars being contaminated with adhesive or other components of the module being contaminated with adhesive.

FIG. 12 illustrates the busbar automatic assembly jig 1000 according to the second embodiment of the present disclosure. The difference between the second embodiment and the first embodiment is that a drive unit 400 is provided to slidably move the first and second slide trays 210 and 220.

Specifically, in the first embodiment, the first and second slide trays 210 and 220 are manually and slidably moved by a worker, but in this embodiment, the first and second slide trays 210 and 220 are slidably moved by the drive unit 400.

In this embodiment, the drive unit 400 may include a cylinder, for example. In this connection, a piston rod is retracted and withdrawn from the cylinder, so that the first and second slide trays 210 and 220 connected to the piston rod may slidably move.

In addition, the drive unit 400 may include a linear motor or an actuator that slidably move the first and second slide trays 210 and 220.

Other configurations and benefits are the same as the previous embodiment.

Although the present disclosure has been described above with reference to preferred embodiments, but is not limited to the aforementioned embodiments. It will be understood by those skilled in the art to which the present disclosure pertains that various modifications and changes may be made to the present disclosure without departing from the spirit of the present disclosure.

### [INDUSTRIAL APPLICABILITY]

The present disclosure provides a busbar automatic assembly jig capable of blocking the source of glue adhesive contamination when a battery module is manufactured and allowing a busbar to be always assembled in a correct position

## Claims

1. A busbar automatic assembly jig, comprising:
a top frame having a plurality of insertion holes each configured to receive a respective busbar therein; and
a slide unit configured to slidably move along a lower side of the top frame to support and release the busbars.

2. The busbar automatic assembly jig of claim 1, wherein each insertion hole in the top frame extends in a first direction along a lengthwise direction of the respective busbar.

3. The busbar automatic assembly jig of claim 2, wherein the plurality of insertion holes in the top frame are spaced apart from one another along a second direction perpendicular to the first direction.

4. The busbar automatic assembly jig of claim 1, wherein, in each insertion hole of the top frame, first and second opposite side surfaces of the insertion hole extending in a first direction are inclined downward toward the lower side of the top frame.

5. The busbar automatic assembly jig of claim 4, wherein, in each insertion hole of the top frame, first and second opposite ends each connecting the first and second side surfaces of the insertion hole are inclined downward toward the lower side of the top frame.

6. The busbar automatic assembly jig of claim 1, wherein each insertion hole defines respective edges, and edge grooves are disposed at each edge of each insertion hole of the top frame.

7. The busbar automatic assembly jig of claim 1, wherein the slide unit comprises:
a first slide tray that is slidably disposed on a first lateral side of the top frame and that is configured to support and release a first end of each busbar by sliding movement; and
a second slide tray that is slidably disposed on a second lateral side of the top frame and that is configured to support and release a second end of each busbar by sliding movement.

8. The busbar automatic assembly jig of claim 7, wherein:
the first slide tray comprises an end support unit supporting the first end of each busbar; and
the second slide tray comprises an end support unit supporting the second end of each busbar.

9. The busbar automatic assembly jig of claim 7, wherein:
the top frame comprises a plurality of guide grooves extending in a first direction; and
the first slide tray and the second slide tray each comprise guide blocks that are inserted into the guide grooves and that are configured to guide movement of the respective slide tray.

10. The busbar automatic assembly jig of claim 1, further comprising a bottom frame disposed on the lower side of the top frame.

11. The busbar automatic assembly jig of claim 10, wherein:
the bottom frame comprises a plurality of through holes defined therein; and
the top frame is configured such that when a support of the slide unit is released, each busbar disposed on the top frame falls down through a respective one of the through holes.

12. The busbar automatic assembly jig of claim 7, further comprising a bottom frame disposed on the lower side of the top frame, wherein:
the first slide tray comprises an outer protrusion unit on an outside of a lower portion thereof that is configured to contact a first outer side surface of the bottom frame when the first slide tray moves toward the top frame; and
the second slide tray comprises an outer protrusion unit on an outside of a lower portion thereof that is configured to contact a second outer side surface of the bottom frame when the second slide tray moves toward the top frame.

13. The busbar automatic assembly jig of claim 7, further comprising a bottom frame disposed on the lower side of the top frame, wherein:
the second slide tray comprises a lower protrusion unit at a bottom thereof; and
the second slide tray is configured such that when the second slide tray moves in a direction away from the top frame, the lower protrusion unit contacts the bottom frame to restrict movement of the second slide tray.

14. The busbar automatic assembly jig of claim 7, wherein the first and second slide trays each comprise a seating guide member that is configured to guide the busbars to fall through the insertion holes when a support of the busbars is released.

15. The busbar automatic assembly jig of claim 7, further comprising a drive unit configured to slidingly move the first and second slide trays.

16. A method for manufacturing a battery module comprising a cell top frame with a plurality of busbars disposed on an upper portion thereof, the method comprising:
disposing the busbars in respective insertion holes defined in a top frame in a busbar automatic assembly jig comprising: the top frame having the plurality of insertion holes; and a slide unit configured to support and release the busbars, the slide unit configured to be slidably moved along a lower side of the top frame;
disposing the busbar automatic assembly jig on an upper portion of the cell top frame;
releasing a support of each busbar by slidably moving the slide unit of the busbar automatic assembly jig; and
releasing the support of each busbar so that the busbar falls from the top frame and is seated on the cell top frame.

17. The method of claim 16, wherein the slide unit comprises:
a first slide tray that is slidably disposed on a first lateral side of the top frame and supports and releases a first end of each busbar by sliding movement; and
a second slide tray that is slidably disposed on a second lateral side of the top frame and supports and releases a second end of each busbar by sliding movement.

18. The method of claim 17, wherein, during the releasing of the support of each busbar, a support of the first end of each busbar is released by slidably moving the first slide tray, and then a support of the second end of each busbar is released by slidably moving the second slide tray.

19. The method of claim 16, wherein the busbar automatic assembly jig further comprises a bottom frame disposed on the lower side of the top frame.
